(19) Europäisches Patentamt
European Patent Office
Office européen des brevets

(11) **EP 3 530 929 B1**

(12) **EUROPEAN PATENT SPECIFICATION**

(45) Date of publication and mention
of the grant of the patent:
**08.12.2021 Bulletin 2021/49**

(51) Int Cl.:
*F02K 3/06* *(2006.01)* *F02C 9/16* *(2006.01)*

(21) Application number: **19154176.2**

(22) Date of filing: **29.01.2019**

(54) **GAS TURBINE ENGINE COMPRESSOR MANAGEMENT SYSTEM**

GASTURBINENTRIEBWERKVERDICHTERVERWALTUNGSSYSTEM

SYSTÈME DE GESTION DE COMPRESSEUR DE MOTEUR DE TURBINE À GAZ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2018 GB 201803137**

(43) Date of publication of application:
**28.08.2019 Bulletin 2019/35**

(73) Proprietor: **Rolls-Royce plc
London N1 9FX (GB)**

(72) Inventor: **Rowe, Arthur
Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
**EP-A1- 2 937 522    EP-A1- 3 141 725
EP-A2- 2 148 044    GB-A- 2 548 584
US-A- 5 042 245**

## Description

The present disclosure concerns a system for management of a gas turbine engine compressor.

Gas turbines typically comprise compressors of either an axial or a centrifugal type. In either case (though particularly for axial compressors), compressor variable geometry is desirable in order to allow the compressor to operate at a wide range of compressor rotational speeds, air mass flow rates and compressor loads.

Conventionally, compressor variable geometry comprises one or both of compressor bleeds and variable guide vanes (VGVs). Compressor bleeds allow a portion of air downstream of one or more compressor stages to be dumped overboard through a bleed valve, rather than passed to a downstream component, thereby reducing compressor pressure ratio. Similarly, variable guide vanes adjust the angle of oncoming air to a downstream rotor stage, to similarly reduce the compressor pressure ratio for a given rotational speed.

Compressor variable geometry is conventionally controlled on the basis of one or more compressor parameters such as pressure ratio, working gas flow temperature and / or compressor rotational speed. A "schedule" is used that relates a given sensed or calculated compressor parameter, and a corresponding desired variable geometry setting for that compressor. In many cases, different schedules are provided for different operating conditions, such as steady state and transient conditions.

European patent publication EP2937522 discloses a method of controlling a gas turbine engine having a booster compressor, a core compressor, combustion equipment, a core turbine, and a low-pressure turbine. The low-pressure turbine also drives an external load having a defined speed characteristic. The booster compressor has one or more rows of variable stator vanes. The method includes: scheduling variation in the angle of the variable stator vanes as a function of the speed of the booster compressor such that the vanes open as the booster compressor speed increases; measuring or setting one or more operational parameters which are determinative of the temperature at entry to the core turbine; and biasing the scheduling of the angle variation of the variable stator vanes as a function of the operational parameter(s) to reduce variation in temperature at entry to the core turbine.

European patent publication EP2148044 discloses a compressor variable stator vane arrangement comprising at least one stage of variable stator vanes. A processor determines a target operating line as a function of ambient pressure (Pamb) and total inlet pressure (P20). The target operating line is defined to ensure the gas turbine engine operates simultaneously at both the minimum required compressor speed and the minimum required compressor outlet pressure when commanded to idle to minimise idle thrust and fuel burn. The processor determines if the operating point of the compressor, defined in terms of corrected outlet pressure (PS26/DP20) and corrected rotational speed (N2RTHT20) of the compressor rotor is above or below the target operating line of the compressor. The processor adjusts the angle of the variable stator vanes to make the operating point operate on the target operating line.

GB patent publication GB2548584 discloses a method of controlling a gas turbine engine having one or more compressors to reduce the likelihood of a flame-out. The method includes the steps of: sensing the rotational speed of the compressor; obtaining a pressure differential across the compressor by comparing the static pressure sensed at the compressor input and output; venting from the compressor output if the pressure differential exceeds a predetermined value for the speed. The pressures may be sensed at a number of locations around the periphery of the input, with corresponding locations at the output, to obtain a number of differentials, a mean value is used to control the venting. The temperature at the outlet may also be used to modify the differential value. The venting may be controlled by a bleed valve providing modulated control until the output static pressure is under a safe working pressure, or until a maximum efficiency value is reached. The engine may have a combustion chamber with a fuel supply controlled by a modulating valve dependent upon at least: the power demand; the pressure differential; and temperature of air entering the combustion chamber.

European patent publication EP3141725 discloses a method of controlling a variable area gas turbine engine. The method includes running the variable area turbine engine at initial settings, monitoring two sets of operating parameters of the engine at the initial settings, and deducing vane angles of adjustable vanes without directly measuring the vane angles from mapped data of the two sets of operating parameters of a similar engine operated while direct vane angle measurements were being recorded.

According to a first aspect of the invention, according to claim 1, there is provided a gas turbine engine compressor operating system, the gas turbine engine comprising:

a low pressure compressor and a high pressure compressor, the low and high pressure compressors being driven by low and high pressure shafts respectively, the high pressure compressor being provided downstream in core mass flow of the low pressure compressor; the compressor operating system comprising:

a controller configured to control a variable geometry actuator of the low pressure compressor, the controller being configured to control the variable geometry actuator on the basis of low pressure compressor rotational speed and a high pressure compressor operating parameter comprising one or more of high pressure compressor mass flow rate $\dot{m}$, high pressure compressor pressure ratio (P30:P26), high pressure compressor rotational speed (N2), high pressure compressor corrected rotational speed (N2/√T26), and high pressure compressor variable inlet guide vane angle ($\alpha$).

Consequently, the low pressure compressor is controlled on the basis of both low pressure compressor speed and one or more high pressure compressor parameters.

The low pressure compressor rotational speed may comprise a corrected low pressure compressor rotational speed.

The gas turbine engine may comprise a geared turbofan comprising a fan coupled to an output of a reduction gearbox. An input of the reduction gearbox may be coupled to the low pressure shaft, and a low pressure turbine may be coupled to the low pressure shaft.

The variable geometry actuator may comprise one or both of a variable inlet guide vane and a bleed valve.

The controller may be configured to operate the low pressure compressor on the basis of one of a first schedule and a second schedule in accordance with the high pressure compressor operating parameter. The low pressure compressor may be operated in accordance with the first schedule where the high pressure compressor is at a relatively low pressure ratio, and may be operated in accordance with the second schedule where the high pressure compressor is at a relatively high pressure ratio.

Where the actuator comprises a variable guide vane, the second schedule may comprise a more open inlet guide vane position for a given low pressure compressor rotational speed than the first schedule.

Where the variable geometry actuator comprises a bleed valve, the second schedule may comprise a more closed bleed valve position for a given low pressure compressor rotational speed than the first schedule.

Alternatively, the controller may be configured to determine a correction factor to the low pressure compressor control schedule based on the high pressure compressor parameter. The correction factor may be proportional to one or more of the high pressure compressor mass flow, the high pressure compressor pressure ratio, or a parameter indicative of the high pressure compressor pressure ratio.

According to a second aspect of the invention according to claim 12, there is provided a method of controlling a gas turbine engine compressor of a gas turbine engine, the engine comprising:

a low pressure compressor and a high pressure compressor, the low and high pressure compressors being driven by low and high pressure shafts respectively, the high pressure compressor being provided downstream in core mass flow of the low pressure compressor; the method comprising:

> determining a low pressure compressor rotational speed;
> determining a high pressure compressor operating parameter; and
> controlling a variable geometry actuator of the low pressure compressor based on the low pressure compressor rotational speed and the high pressure compressor operating parameter comprising one or more of high pressure compressor mass flow rate $\dot{m}$, high pressure compressor pressure ratio (P30:P26), high pressure compressor rotational speed (N2), high pressure compressor corrected rotational speed (N2/$\sqrt{T26}$), and high pressure compressor variable inlet guide vane angle ($\alpha$).

According to a third aspect of the invention according to claim 13, there is provided a gas turbine engine comprising a compressor operating system according to the first aspect.

Embodiments will now be described by way of example only, with reference to the Figures, in which:

> **Figure 1** is a sectional side view of a gas turbine engine;
>
> **Figure 2** is a flow diagram illustrating a method of control of a compressor of the gas turbine engine of figure 1;
>
> **Figure 3** is a graph showing low pressure compressor guide vane angle plotted against low pressure compressor corrected speed for first and second schedules according to the present disclosure;
>
> **Figure 4** is a graph showing low pressure bleed valve position plotted against low pressure compressor corrected speed for first and second schedules according to the present disclosure;
>
> **Figure 5** is a graph relating high pressure compressor pressure ratio relative to low pressure corrected speed, comparing a prior compressor control method to a compressor control method in accordance with the present disclosure;
>
> **Figure 6** is a flow diagram illustrating an alternative method of control of a compressor of the gas turbine engine of figure 1; and
>
> **Figure 7** is a graph showing low pressure compressor guide vane angle plotted against low pressure compressor corrected speed for an alternative compressor control schedule according to the present disclosure.

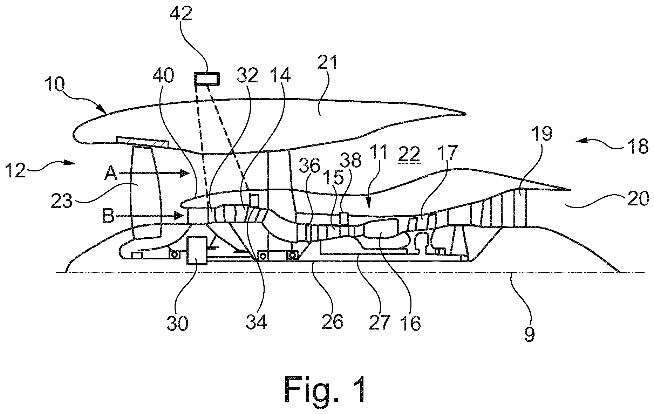

With reference to Figure 1, a gas turbine engine is generally indicated at 10, having a principal and rotational axis 11. The engine 10 comprises, in axial flow series, an air intake 12, a propulsive fan 23, a gearbox 30, a low pressure compressor (LPC) 14, a high-pressure compressor (HPC) 15, combustion equipment 16, a high-pressure turbine 17, a low-pressure turbine 19 and an exhaust nozzle 20. A nacelle 21 generally surrounds the engine 10 and defines the intake 12.

The gas turbine engine 10 works in the conventional manner so that air entering the intake 12 is accelerated and compressed by the fan 23 to produce two air flows: a first air flow A into the engine core and a second air flow B which passes through a bypass duct 22 to provide propulsive thrust. The first and second airflows A, B split at a generally annular splitter 40, for example at the leading edge of the generally annular splitter 40 at a generally circular stagnation line.

The engine core includes the LPC 14 which compresses the air flow directed into it before delivering that air to the HPC 15 where further compression takes place.

The compressed air exhausted from the HPC 15 is directed into the combustion equipment 16 where it is mixed with fuel and the mixture combusted. The resultant hot combustion products then expand through, and thereby drive the high pressure turbine 17 and the low pressure turbine 19 before being exhausted through the nozzle 20 to provide additional propulsive thrust. The LPC 14 is driven by the low pressure turbine 19 by a low pressure shaft 26. The HPC 15 is driven by the high pressure turbine 17 by a high pressure shaft 27. The low pressure shaft 26 also drives the fan 23 via the gearbox 30. The gearbox 30 is a reduction gearbox in that it gears down the rate of rotation of the fan 23 by comparison with the low pressure compressor 14 and low pressure turbine 19. The gearbox 30 may be any suitable type of gearbox, such as an epicyclic planetary gearbox (having a static ring gear, rotating and orbiting planet gears supported by a planet carrier and a rotating sun gear) or a star gearbox. Additionally or alternatively the gearbox 30 may drive additional and/or alternative components (e.g. a further compressor).

The low and high pressure compressors 14, 15, high and low pressure turbines 17, 19, low and high pressure shafts 26, 27, and the combustor 16 may all be said to be part of the engine core.

As will be understood, the geared turbofan of figure 1 has different characteristics compared to "direct drive" turbofans, in which the low pressure turbine is directly coupled to the fan. Compared to a direct drive turbine, the low pressure turbine 19 and low pressure compressor 15 spin at a higher rate for a given fan 23 rotational speed. This higher rotational speed, in addition to the additional rotational mass of the rotating elements of the gearbox 30, may result in the low pressure spool (comprising the low pressure turbine 19, shaft 26, compressor 14, gearbox 30 and fan 23) to have a relatively high rotational inertia compared to direct drive engines of a similar size. On the other hand, high pressure spool (comprising the HPC 15, shaft 27 and turbine 17) is unaffected by this change. This has an effect on operability of the low and high pressure compressors 14, 15.

In particular, it has been found by the inventors that during accelerations, the HPC 15 accelerates relatively rapidly, whereas the LPC 14 accelerates relatively slowly. This results in a relatively low pressure ratio across the LPC 14 during accelerations due to two related effects. Firstly, the LPC 14 rotates relatively slowly, resulting in a low pressure ratio being developed. Secondly, the HPC 15 reaches high speeds more quickly, resulting in a relatively high pressure ratio. This high pressure ratio across the HPC 15 "sucks" air from the LPC exit, resulting in a lower pressure rise across the LPC 14, and so a low load on the LPC.

Each compressor 14, 15 comprises variable geometry actuators in the form of variable inlet guide vanes (IGVs) 32, 36, and bleed valves 34, 38. The IGVs 32, 36 are of conventional construction, and are configured to pivot about a generally radially extending axis, to adjust the angle of attack ($\alpha$) of air impinging on downstream compressor rotor stages. Conventionally, the IGVs 32, 36 are located toward the front of a respective compressor 14, 15, prior to the first rotor stage, and optionally for one or more subsequent stages. The IGVs 32, 36 are moveable between an "open" position, in which a leading edge of the respective IGV 32, 36 is substantially parallel to the engine axis 9, and the angle of attack of the downstream rotor blades is relatively high, and a "closed" position, in which the leading edge is turned further toward a circumferential direction, away from the engine axis 9, and the angle of attack of the downstream rotor blades is relatively low.

Similarly, the bleed valves 34, 38 are valves, which can open to allow core air to escape from a respective compressor 14, 15, or close to keep core air within the compressor 14, 15, for further compression or combustion in downstream components. The bleed valves 34, 38 are typically located toward the rear of the compressors 14, 15. Opening of a bleed valve 34, 38, consequently typically reduces the pressure ratio of that compressor 14, 15, while closing the valve 34, 38 raises the pressure.

In a conventional turbofan engine, the IGVs 32, 36 and bleed valves 34, 38 are controlled in accordance with a compressor control schedule. The schedule takes into account current conditions of the compressor being controlled (e.g. low pressure compressor 14 rotational speed N1 for the LPC control schedule), as well as environmental conditions such as inlet temperature T24. The vanes 32, 36 and valves 34, 38 are then controlled on the basis of the current rotational speed N1, corrected for LPC 14 inlet temperature T24. Typically, the IGVs are closed at low compressor speed N1, and open at higher speeds. By closing the IGVs 32, 34 at low speeds, blade angle of attack $\alpha$ and mass flow W is reduced, to ensure that the compressor blades do not stall. The difference between the current pressure ratio P26/P24 of the compressor 14 and the pressure ratio P26/P24 at which the compressor will stall or surge is known as the "surge margin". The schedule attempts to maintain the compressor ratio below the surge margin at all times, but reasonably close, so as to maintain high efficiency. Similarly, the valves 34, 38 are opened at low corrected rotational speeds N1/√T24, so that pressure ratio is similarly reduced, and closed at higher rotational speeds so that pressure ratio is increased. Typically, the bleeds have only two settings - open and closed, though variable flow bleed valves with multiple continuously variable positions between fully open and fully closed are known.

Consequently, during acceleration, in a conventional turbofan engine, the IGVs 32 of the LPC 14 are held closed, while the HPC 15 accelerates rapidly. In view of the high pressure ratio across the HPC 15 and the closed IGVs 32, the pressure ratio across the LPC 14 remains low, in spite of the increasing speed. This can cause two problems.

Firstly, mass flow downstream of the LPC 14 remains low, restricting acceleration. Secondly, due to the low pressure ratio of the LPC 14, overall pressure ratio is reduced, and so engine power and therefore acceleration is further reduced. Thirdly, the low load on the LPC 14 can result in an "overshoot", i.e. a rapid increase in HPC 15 rotational speed. This may damage the engine.

The present disclosure provides a compressor control method and system which seeks to address one or more of the above problems.

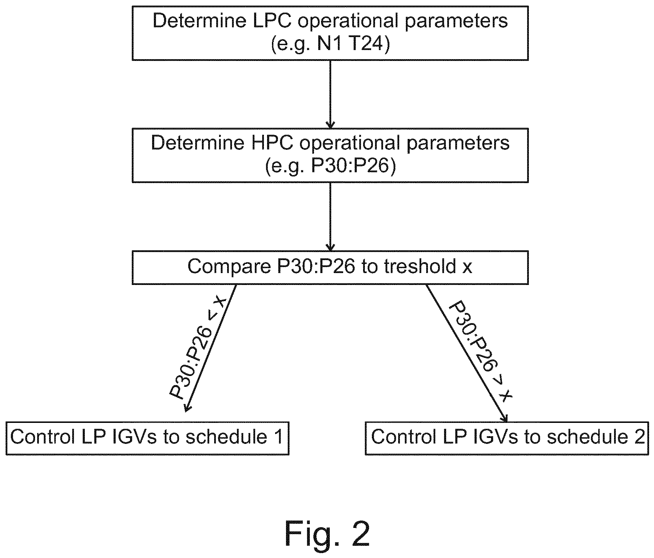

Figure 2 shows a low pressure compressor 14 control scheme in accordance with the present disclosure, which is implemented by a controller 42. In a first step, one or more LPC 14 operational parameters are determined. In the present embodiment, the LPC 14 operational parameters comprise LPC 14 rotational speed N1 as determined by a speed sensor (not shown), and low temperature compressor 24 inlet temperature T24. The LPC 14 rotational speed N1 and low temperature compressor 24 inlet temperature T24 are used to determine a LPC 14 corrected speed N1/√T24 by dividing the rotational speed (in terms of rotations per minute or an equivalent unit) by the square root of the absolute compressor 14 inlet temperature (in terms of Kelvin or an equivalent unit).

In a second step, one or more high pressure compressor 15 operational parameters are determined. It has been found that a useful HPC 15 parameter for controlling the LPC 14 is core air mass flow rate $\dot{m}$. However, it may be difficult to direct determine $\dot{m}$ in practice, and so a surrogate parameter may be measured instead, which provides an accurate indication of $\dot{m}$ in lieu of a direct measurement.

In the present embodiment, the HPC 15 operational parameters used in lieu of $\dot{m}$ comprise high pressure compressor 15 inlet pressure P26 and high pressure compressor outlet pressure P30. Typically, the inlet and outlet pressures are in terms of static pressure, though dynamic or total pressures could be used. These pressures may be determined directly using pressure sensors (such as pitot tubes or equivalent sensors) located in the inlet and outlet of the high pressure compressor 15 respectively. An HPC 15 pressure ratio P30:P26 is calculated dividing the outlet pressure P30 by the inlet pressure P26.

Alternative or additional alternative indications of $\dot{m}$ include high pressure compressor 15 rotational speed N2, high pressure compressor 15 correct rotational speed N2/√T26 (i.e. the rotational speed divided by the square root of the absolute compressor 15 inlet temperature), and HP compressor VGV 36 angle. N2 and N2/√T26 have the advantage of being relatively easy to measure, are typically already measured in existing gas turbine engines, and are generally proportional to mass flow. Similarly, VGV 36 angle (either as output from a HPC VGV 36 schedule or measured from a position sensor) again provides a convenient measurement, but is potentially less accurate.

In a third step, the HPC pressure ratio P30:P26 is compared to a predetermined threshold, and a first or a second LPC 14 compressor VGV schedule is selected on the basis of the comparison. If the high pressure compressor 15 pressure ratio P30:P26 is below the threshold, the first schedule is selected, while if the pressure ratio is above the threshold, the second schedule is selected. The threshold for rising HPC pressure ratio P30:P26 may be higher than the threshold for falling HPC pressure ratio P30:P26, to prevent rapid switching back and forth between schedules where the HPC pressure ratio P30:P26 is close to a switching threshold.

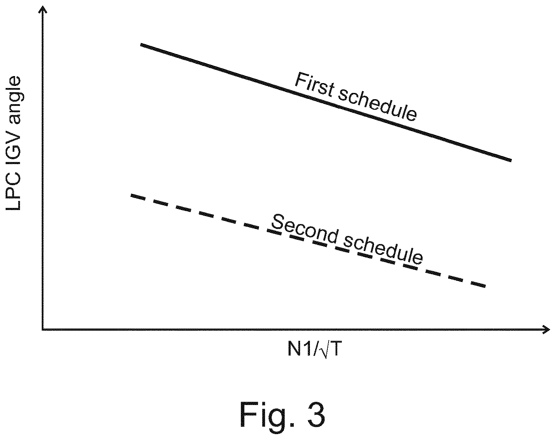

In a fourth step, the LPC 14 is controlled in accordance with the selected schedule. The control scheme incorporates one or more of the IGVs 32 and bleed valves 34. Figure 3 shows a graph illustrating the first and second control schedules for the IGVs 32 in solid lines and dotted lines respectively.

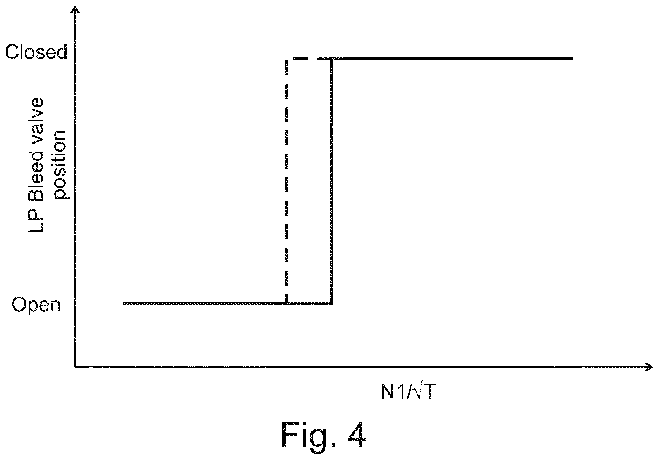

Similarly, referring to figure 4, a similar bleed valve 34 schedule is utilised. For both the first schedule and the second schedule, the bleed valves 34 are scheduled such that the bleed valves are open at low LPC 14 corrected speeds N1/√T24, and closed at higher speeds, as shown. However, the threshold LPC 14 corrected speed N1/√T24 at which the bleed valve is closed varies. At low HPC 15 pressure ratio P30:P26, the bleed valves 34 are operated in accordance with a first schedule (as shown by the solid line in figure 4), which has a threshold value such that the bleed valves 34 are opened at relatively high corrected speeds N1/√T24. On the other hand, where the high HPC 15 pressure ratio P30:P26 exceeds a predetermined threshold, the bleed valves 32 are operated in accordance with a second schedule (as shown by the dotted line in figure 4), which has a threshold value such that the bleed valves 34 are opened at relatively low corrected speeds N1/√T24.

First considering the first control schedule, it can be seen that IGV 32 vane angle decreases (i.e. the IGV opens) from a relatively closed position as low pressure compressor corrected speed N1/√T24 increases. This ensures that the compressor is operated relatively efficiently, while ensuring that sufficient stall margin is maintained. Typically, during an acceleration from a low engine speed (e.g. flight idle), the engine will be operated in accordance with the first schedule, as the LPC 14 and HPC 15 begin to accelerate. Consequently, at least initially, the LPC 14 is operated according to a relatively conservative compressor schedule.

On the other hand, as can be seen, in accordance with the second schedule, the IGV 32 vane angle again decreases (i.e. the IGV opens) as low pressure compressor corrected speed $N1\sqrt{T24}$ increases. However, the second schedule has a lower IGV angle (i.e. a more open position) for a given LPC $N1\sqrt{T24}$ value. As can be seen, the slope (i.e. the rate at which the IGVs open at increasing $N1\sqrt{T24}$) is the same or similar, with the graph shifted downwards between the first and second schedules. In other words, a constant IGV angle is subtracted from the first schedule to produce the second schedule. Alternatively, or in addition, the slope may also vary between the first and second schedules. It will be understood that the schedules may not comprise a constant slope, but may comprise a complex curve.

Consequently, the LPC 14 is controlled in operation as follows. Starting from flight idle, both the LPC 14 and HPC 14 have relatively low rotational speeds N1, N2. As the engine accelerates, both compressors 14, 15 accelerate toward higher speeds. As the mass flow rate $\dot{m}$ through the HPC 15 is initially low, as indicated by the low pressure ratio P30:P26 across the HPC, the LPC 14 is operated in accordance with the first schedule. However, the HPC rapidly accelerates, thereby increasing the mass flow rate $\dot{m}$ and pressure ratio P30:P26 across the HPC. Consequently, the controller switches control of the IGVs to the second schedule, thereby reducing IGV vane angle, and increasing pressure ratio across the LPC 14, which in turn increases load on the LPC 14. Consequently, the engine is able to accelerate more quickly. Additionally, the increasing load on the LPC 14 in view of the reduced vane angle prevents excessive HPC 15 rotational speed increase, and so prevents HPC 15 runaway during acceleration.

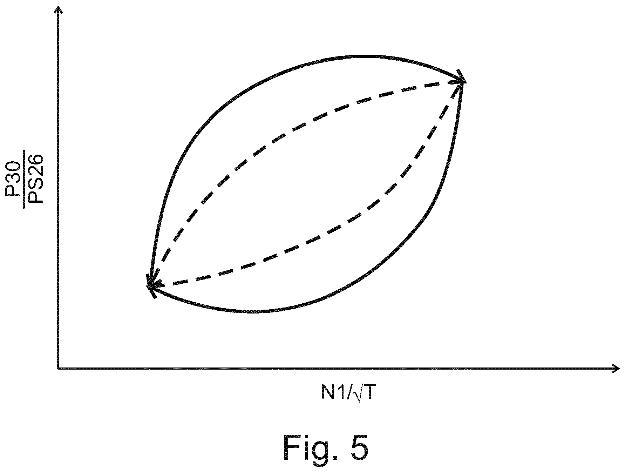

Referring now to figure 5, the effect of the new method of operation on the high pressure compressor can be shown. The solid lines represent acceleration and deceleration of the engine from idle to maximum take-off thrust. As can be seen, the HPC compressor 15 ratio "overshoots", i.e. exceeds a desired maximum during acceleration, before reducing once more. This may cause surges or damage to the engine. On the other-hand, the pressure ratio falls below a desired minimum during declaration, which may result in unstable combustion in the combustor and / or "flameout", i.e. shutdown of the engine. In contrast, the control method of the current disclose (shown in dotted lines) results in a smooth acceleration of high pressure compressor pressure ratio as the engine accelerations, and also a smooth deceleration, with no overshoots.

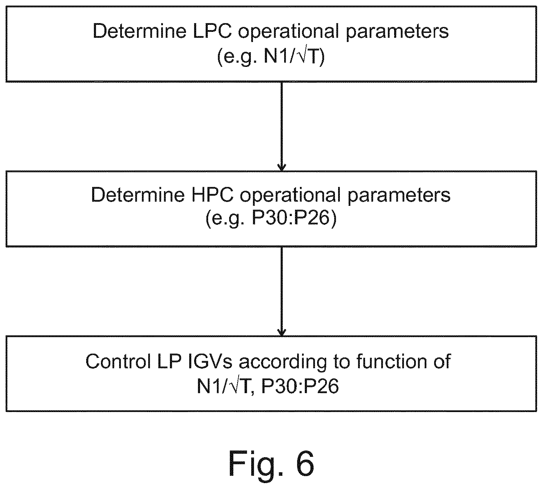

Referring now to figure 6, an alternative control scheme in accordance with the present disclosure is shown.

In first and second steps, low and high pressure compressor 14, 15 operational parameters ($N1\sqrt{T}$ and P30:P26 respectively in this example) are again determined, in a similar manner to the first and second steps of the first embodiment. Again, alternative operational parameters as disclosed for the first embodiment could be utilised.

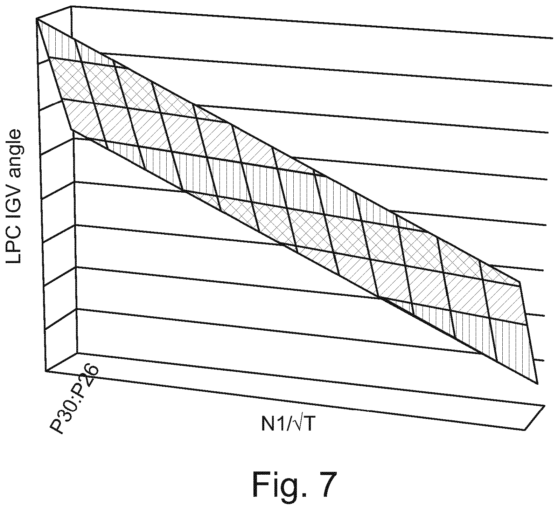

In a third step, an LPC 14 VGV 36 position is calculated according to a schedule that takes into account both LPC 14 rotational speed $N1\sqrt{T}$ and HPC 15 compressor ratio P30:P26. As can be seen in figure 7, IGV angle decreases on the basis of increased $N1\sqrt{T}$, similarly to the first and second schedules of the first embodiment. However, in addition, IGV angle also decreases as HPC 15 compressor ratio P30:P26 increases. Essentially therefore, a "correction factor" is applied to the schedule based on $N1\sqrt{T}$, with the IGV 36 vane angle reducing proportionate to P30:P26 increase. Consequently, finer control on the basis of HPC 15 mass flow $\dot{m}$ is achieved.

A similar approach could again be used for LP bleed valve 34 operation, with the bleed valve 34 opening threshold $N1\sqrt{T}$ being determined on the basis of HPC 15 pressure ratio P30:P26, with higher pressure ratios generally leading to a lower bleed valve opening threshold $N1\sqrt{T}$. Where the bleed valve 34 is variable (i.e. has more than two positions), the extent of opening may be varied in relation to the HPC 15 pressure ratio, with higher ratios leading to a more closed position for a given $N1\sqrt{T}$.

Consequently, in many cases, lower IGV angles (i.e. more open IGVs) can be utilised, thereby increasing mass flow through the engine, as well as increasing LPC 14 compressor load. Consequently, HP compressor runaway is prevented, and compressor mass flow is increased, leading to increased acceleration without risking compressor stall or surge. Similarly, the bleed valves 34 can be closed for a large range of LPC 14 operating conditions.

Such a method is particularly, though not exclusively, suitable for geared turbofans, where the LPC, low pressure turbine, reduction gearbox and fan are located on the same shaft.

It will be understood that the invention is not limited to the embodiments above-described and various modifications and improvements can be made without departing from the concepts described herein.

**Claims**

1. A gas turbine engine compressor operating system, the gas turbine engine (10) comprising:

   a low pressure compressor (14) and a high pressure compressor (15), the low and high pressure compressors (14, 15) being driven by low and high pressure shafts (26, 27) respectively, the high pressure compressor (15) being provided downstream in core mass flow of the low pressure compressor (14);
   **characterised in that** the compressor operating system comprises:

a controller (42) configured to control a variable geometry actuator (32, 34) of the low pressure compressor (14), the controller (42) being configured to control the variable geometry actuator (32, 34) on the basis of low pressure compressor (14) rotational speed (N1) and a high pressure compressor operating parameter comprising one or more of high pressure compressor mass flow rate $\dot{m}$, high pressure compressor pressure ratio (P30:P26), high pressure compressor rotational speed (N2), high pressure compressor corrected rotational speed (N2/√T26), and high pressure compressor variable inlet guide vane angle ($\alpha$).

2. A compressor operating system according to claim 1, wherein the low pressure compressor (14) rotational speed comprises a corrected low pressure compressor rotational speed (N1/ √T24).

3. A compressor operating system according to any of the preceding claims, wherein the gas turbine engine (10) comprises a geared turbofan comprising a fan (23) coupled to an output of a reduction gearbox (30).

4. A compressor operating system according to claim 3, wherein an input of the reduction gearbox (30) is coupled to the low pressure shaft (26), and a low pressure turbine (19) is coupled to the low pressure shaft (26).

5. A compressor operating system according to any of the preceding claims, wherein the variable geometry actuator comprises one or both of a variable inlet guide vane (32) and a bleed valve (34).

6. A compressor operating system according to any of the preceding claims, wherein the controller (42) is configured to operate the low pressure compressor (14) on the basis of one of a first schedule and a second schedule in accordance with the high pressure compressor (15) operating parameter.

7. A compressor operating system according to claim 6, wherein the low pressure compressor (14) is operated in accordance with the first schedule where the high pressure compressor (15) is at a relatively low pressure ratio, and is operated in accordance with the second schedule where the high pressure compressor (15) is at a relatively high pressure ratio.

8. A compressor operating system according to claim 6 when dependent on claim5, the second schedule comprises a more open inlet guide vane (32) position for a given low pressure compressor (14) rotational speed than the first schedule.

9. A compressor operating system according to claim 7 when dependent on claim 6, wherein the second schedule comprises a more closed bleed valve (34) position for a given low pressure compressor (14) rotational speed than the first schedule.

10. A compressor operating system according to any of claims 1 to 5, wherein the controller (42) is configured to determine a correction factor to a low pressure compressor (14) control schedule based on the high pressure compressor parameter.

11. A compressor operating system according to claim 10, wherein the correction factor is proportional to one or more of the high pressure compressor mass flow (m), the high pressure compressor pressure ratio (P30:P26), or a parameter indicative of the high pressure compressor pressure ratio.

12. A method of controlling a gas turbine engine compressor (14) of a gas turbine engine (10), the engine (10) comprising:
a low pressure compressor (14) and a high pressure compressor (14), the low and high pressure compressors (14, 15) being driven by low and high pressure shafts respectively (26, 27), the high pressure compressor (15) being provided downstream in core mass flow of the low pressure compressor (14); the method comprising:

   determining a low pressure compressor (14) rotational speed (N1);
   determining a high pressure compressor operating parameter comprising one or more of high pressure compressor mass flow rate $\dot{m}$, high pressure compressor pressure ratio (P30:P26), high pressure compressor rotational speed (N2), high pressure compressor corrected rotational speed (N2/√T26), and high pressure compressor variable inlet guide vane angle ($\alpha$).; and controlling a variable geometry actuator (32, 34) of the low pressure compressor (14) based on the low pressure compressor (14) rotational speed (N1) and the high pressure compressor (15) operating parameter.

13. A gas turbine engine (10) comprising a compressor operating system according to any of claims 1 to 11.

**Patentansprüche**

1. Verdichterbetriebssystem eines Gasturbinentriebwerks, wobei das Gasturbinentriebwerk (10) umfasst:
einen Niederdruckverdichter (14) und einen Hochdruckverdichter (15), wobei der Nieder- und der Hochdruckverdichter (14, 15) durch Nieder- bzw. Hochdruckwellen (26, 27) angetrieben werden, wobei der Hochdruckverdichter (15) stromabwärts im Kernmassenstrom des Niederdruckverdichters (14) vorgesehen ist; **dadurch gekennzeichnet, dass** das Verdichterbetriebssystem umfasst:

eine Steuerung (42), die dazu konfiguriert ist, einen Aktuator (32, 34) mit variabler Geometrie des Niederdruckverdichters (14) zu steuern, wobei die Steuerung (42) dazu konfiguriert ist, den Aktuator (32, 34) mit variabler Geometrie auf Grundlage einer Drehzahl (N1) des Niederdruckverdichters (14) und eines Betriebsparameters des Hochdruckverdichters, umfassend eines oder mehrere von einem Massendurchsatz $\dot{m}$ des Hochdruckverdichters, einem Druckverhältnis (P30:P26) des Hochdruckverdichters, einer Drehzahl (N2) des Hochdruckverdichters, einer korrigierten Drehzahl $(N2/\sqrt{T26})$ des Hochdruckverdichters und einem variablen Einlassleitschaufelwinkel (a) des Hochdruckverdichters, zu steuern.

2. Verdichterbetriebssystem nach Anspruch 1, wobei die Drehzahl des Niederdruckverdichters (14) eine korrigierte Drehzahl $(N1/\sqrt{T24})$ des Niederdruckverdichters umfasst.

3. Verdichterbetriebssystem nach einem der vorhergehenden Ansprüche, wobei das Gasturbinentriebwerk (10) einen Getriebefan umfasst, der ein Gebläse (23) umfasst, das mit einem Ausgang eines Untersetzungsgetriebes (30) gekoppelt ist.

4. Verdichterbetriebssystem nach Anspruch 3, wobei ein Eingang des Untersetzungsgetriebes (30) mit der Niederdruckwelle (26) gekoppelt ist und eine Niederdruckturbine (19) mit der Niederdruckwelle (26) gekoppelt ist.

5. Verdichterbetriebssystem nach einem der vorhergehenden Ansprüche, wobei der Aktuator mit variabler Geometrie eines oder beides von einer variablen Einlassleitschaufel (32) und einem Ablassventil (34) umfasst.

6. Verdichterbetriebssystem nach einem der vorhergehenden Ansprüche, wobei die Steuerung (42) dazu konfiguriert ist, den Niederdruckverdichter (14) auf Grundlage eines von einem ersten Plan und einem zweiten Plan gemäß dem Betriebsparameter des Hochdruckverdichters (15) zu betreiben.

7. Verdichterbetriebssystem nach Anspruch 6, wobei der Niederdruckverdichter (14) gemäß dem ersten Plan betrieben wird, wenn der Hochdruckverdichter (15) ein relativ niedriges Druckverhältnis aufweist, und gemäß dem zweiten Plan betrieben wird, wenn der Hochdruckverdichter (15) ein relativ hohes Druckverhältnis aufweist.

8. Verdichterbetriebssystem nach Anspruch 6 bei Abhängigkeit von Anspruch 5, wobei der zweite Plan eine weiter geöffnete Position der Einlassleitschaufel (32) bei einer jeweiligen Drehzahl des Niederdruckverdichters (14) als der erste Plan umfasst.

9. Verdichterbetriebssystem nach Anspruch 7 bei Abhängigkeit von Anspruch 6, wobei der zweite Plan eine weiter geschlossene Position des Ablassventils (34) bei einer jeweiligen Drehzahl des Niederdruckverdichters (14) als der erste Plan umfasst.

10. Verdichterbetriebssystem nach einem der Ansprüche 1 bis 5, wobei die Steuerung (42) dazu konfiguriert ist, einen Korrekturfaktor für einen Steuerplan des Niederdruckverdichters (14) auf Grundlage des Parameters des Hochdruckverdichters zu bestimmen.

11. Verdichterbetriebssystem nach Anspruch 10, wobei der Korrekturfaktor proportional zu einem oder mehreren von einem Massendurchsatz ($\dot{m}$) des Hochdruckverdichters, einem Druckverhältnis (P30:P26) des Hochdruckverdichters oder einem Parameter, der das Druckverhältnis des Hochdruckverdichters angibt, ist.

12. Verfahren zum Steuern eines Gasturbinentriebwerksverdichters (14) eines Gasturbinentriebwerks (10), wobei das Triebwerk (10) umfasst: einen Niederdruckverdichter (14) und einen Hochdruckverdichter (14), wobei der Nieder- und der Hochdruckverdichter (14, 15) durch Nieder- bzw. Hochdruckwellen (26, 27) angetrieben werden, wobei der Hochdruckverdichter (15) stromabwärts im Kernmassenstrom des Niederdruckverdichters (14) vorgesehen ist; wobei das Verfahren umfasst:

Bestimmen einer Drehzahl (N1) des Niederdruckverdichters (14);
Bestimmen eines Betriebsparameters des Hochdruckverdichters, umfassend eines oder mehrere von einem Massendurchsatz $\dot{m}$ des Hochdruckverdichters, einem Druckverhältnis (P30:P26) des Hochdruckverdichters, einer Drehzahl (N2) des Hochdruckverdichters, einer korrigierten Drehzahl $(N2/\sqrt{T26})$ des Hochdruckverdichters und einem variablen Einlassleitschaufelwinkel (a) des Hochdruckverdichters; und
Steuern eines Aktuators (32, 34) mit variabler Geometrie des Niederdruckverdichters (14) auf Grundlage der Drehzahl (N1) des Niederdruckverdichters (14) und des Betriebsparameters des Hochdruckverdichters (15).

13. Gasturbinentriebwerk (10), umfassend ein Verdichterbetriebssystem nach einem der Ansprüche 1 bis 11.

**Revendications**

1. Système de fonctionnement de compresseur de moteur à turbine à gaz, le moteur à turbine à gaz (10) comprenant :

   un compresseur basse pression (14) et un compresseur haute pression (15), les compresseurs basse et haute pression (14, 15) étant entraînés respectivement par des arbres basse et haute pression (26, 27), le compresseur haute pression (15) étant disposé en aval du débit massique de noyau du compresseur basse pression (14) ; **caractérisé en ce que** le système de fonctionnement de compresseur comprend :
   un dispositif de commande (42) conçu pour commander un actionneur à géométrie variable (32, 34) du compresseur basse pression (14), le dispositif de commande (42) étant conçu pour commander l'actionneur à géométrie variable (32, 34) sur la base d'une vitesse de rotation (N1) du compresseur basse pression (14) et un paramètre de fonctionnement du compresseur haute pression comprenant l'un ou plusieurs du débit massique m du compresseur haute pression, du rapport de pression (P30:P26) du compresseur haute pression, de la vitesse de rotation du compresseur haute pression (N2), de la vitesse de rotation $(N2/\sqrt{T26})$ corrigée du compresseur haute pression et de l'angle d'aube directrice à incidence variable d'entrée (a) du compresseur haute pression.

2. Système de fonctionnement de compresseur selon la revendication 1, ladite vitesse de rotation du compresseur basse pression (14) comprenant une vitesse de rotation corrigée $(N1/\sqrt{T24})$ du compresseur basse pression.

3. Système de fonctionnement de compresseur selon l'une quelconque des revendications précédentes, ledit moteur à turbine à gaz (10) comprenant un turboréacteur à double flux à engrenages comprenant une soufflante (23) couplée à une sortie d'un réducteur (30).

4. Système de fonctionnement de compresseur selon la revendication 3, une entrée du réducteur (30) étant couplée à l'arbre basse pression (26), et une turbine basse pression (19) étant couplée à l'arbre basse pression (26).

5. Système de fonctionnement de compresseur selon l'une quelconque des revendications précédentes, ledit actionneur à géométrie variable comprenant une aube directrice à incidence variable d'entrée (32) et/ou une soupape de purge (34).

6. Système de fonctionnement de compresseur selon l'une quelconque des revendications précédentes, ledit dispositif de commande (42) étant conçu pour faire fonctionner le compresseur basse pression (14) sur la base de l'un d'un premier programme et d'un second programme conformément au paramètre de fonctionnement de compresseur haute pression (15).

7. Système de fonctionnement de compresseur selon la revendication 6, ledit compresseur basse pression (14) étant actionné selon le premier programme où le compresseur haute pression (15) est à un rapport de pression relativement bas, et fonctionne selon le second programme où le compresseur haute pression (15) est à un rapport de pression relativement élevé.

8. Système de fonctionnement de compresseur selon la revendication 6 lorsqu'elle dépend de la revendication 5, le second programme comprend une position d'aube directrice d'entrée (32) plus ouverte, pour une vitesse de rotation donnée du compresseur basse pression (14), que le premier programme.

9. Système de fonctionnement de compresseur selon la revendication 7 lorsqu'elle dépend de la revendication 6, ledit second programme comprenant une position de soupape de purge (34) plus fermée, pour une vitesse de rotation donnée du compresseur basse pression (14), que le premier programme.

10. Système de fonctionnement de compresseur selon l'une quelconque des revendications 1 à 5, ledit dispositif de commande (42) étant conçu pour déterminer un facteur de correction pour un programme de commande du compresseur basse pression (14) sur la base du paramètre de compresseur haute pression.

11. Système de fonctionnement de compresseur selon la revendication 10, ledit facteur de correction étant proportionnel à un ou plusieurs du débit massique (m) du compresseur haute pression, du rapport de pression (P30:P26) du compresseur haute pression, ou d'un paramètre indiquant le rapport de pression du compresseur haute pression.

12. Procédé de commande d'un compresseur de moteur à turbine à gaz (14) d'un moteur à turbine à gaz (10), le moteur (10) comprenant :
   un compresseur basse pression (14) et un compresseur haute pression (14), les compresseurs basse et haute pression (14, 15) étant entraînés respectivement par des arbres basse et haute pression (26, 27), le compresseur haute pression (15) étant disposé en aval dans le débit massique de noyau du compresseur basse pression (14) ; le procédé comprenant :

la détermination d'une vitesse de rotation (N1) du compresseur basse pression (14) ;
la détermination d'un paramètre de fonctionnement du compresseur haute pression comprenant l'un ou plusieurs du débit massique m du compresseur haute pression, du rapport de pression (P30:P26) du compresseur haute pression, de la vitesse de rotation (N2) du compresseur haute pression, de la vitesse de rotation corrigée $(N2/\sqrt{T26})$ du compresseur haute pression, et de l'angle d'aube directrice à incidence variable d'entrée (a) du compresseur haute pression ; et
la commande d'un actionneur à géométrie variable (32, 34) du compresseur basse pression (14) sur la base de la vitesse de rotation (N1) du compresseur basse pression (14) et du paramètre de fonctionnement du compresseur haute pression (15).

13. Moteur à turbine à gaz (10) comprenant un système de fonctionnement de compresseur selon l'une quelconque des revendications 1 à 11.

Fig. 1

```
┌─────────────────────────────────────────┐
│   Determine LPC operational parameters   │
│            (e.g. N1 T24)                 │
└─────────────────────────────────────────┘
                    │
                    ▼
┌─────────────────────────────────────────┐
│   Determine HPC operational parameters   │
│            (e.g. P30:P26)                │
└─────────────────────────────────────────┘
                    │
                    ▼
┌─────────────────────────────────────────┐
│      Compare P30:P26 to treshold x       │
└─────────────────────────────────────────┘
         P30:P26 < x        P30:P26 > x
        ▼                              ▼
┌──────────────────────────┐  ┌──────────────────────────┐
│ Control LP IGVs to schedule 1 │  │ Control LP IGVs to schedule 2 │
└──────────────────────────┘  └──────────────────────────┘
```

# Fig. 2

Fig. 3

Fig. 4

Fig. 5

Determine LPC operational parameters
(e.g. N1/√T)

Determine HPC operational parameters
(e.g. P30:P26)

Control LP IGVs according to function of
N1/√T, P30:P26

# Fig. 6

Fig. 7

**EP 3 530 929 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2937522 A
- EP 2148044 A
- GB 2548584 A
- EP 3141725 A